# EUROPÄISCHE PATENTSCHRIFT

(11) **EP 2 208 649 B1**
(45) Veröffentlichungstag und Bekanntmachung des Hinweises auf die Patenterteilung: **10.06.2015**
(21) Anmeldenummer: 09178797.8
(22) Anmeldetag: 11.12.2009
(51) Int. Cl.: B60S 1/38

(54) **Wischblatt und Herstellungsverfahren**
Wiper blade and method for its production
Raclette d'essuie-glace et procédé de fabrication

(30) Priorität: 20.01.2009 DE 102009000320
(43) Veröffentlichungstag der Anmeldung: 21.07.2010
(73) Patentinhaber: Robert Bosch GmbH, 70442 Stuttgart (DE)
(72) Erfinder: Verburgh, Yves, B-2870, Puurs (BE)

(56) Entgegenhaltungen:
- EP-A1- 0 984 877
- DE-A1-102007 050 164
- JP-A- S62 110 549
- US-A- 2 098 482

## Beschreibung

Die vorliegende Erfindung betrifft ein Wischblatt und ein Herstellungsverfahren zur Herstellung eines derartigen Wischblatts.

### Stand der Technik

Frontscheibenwischerblätter sollen sich an die Kontur der Windschutzscheibe eines Kraftfahrzeugs anpassen und ihre Flexibilität auch bei unterschiedlichen Temperaturen behalten. Frontscheibenwischerblätter werden daher herkömmlicherweise aus Elastomer-Profilen und Gummimaterialien, wie Naturkautschuk und Chloropren-Kautschuk, hergestellt. Darüber hinaus können Wischblätter aus Silikongummi oder Polyurethangummi hergestellt werden.

Verglichen mit Materialien, wie Glas oder Plastik, weisen Elastomere einen hohen Gleitreibungskoeffizienten auf, so dass im Fall einer senkrechten Anpresskraft auf das Elastomer-Profil, beispielsweise einem Frontscheibenwischerblatt auf der Oberfläche einer Glaswindschutzscheibe, ein Vielfaches der Anpresskraft für die horizontale Bewegung aufgebracht werden muss.

Um die Reibung des Wischblatts auf der Windschutzscheibe zu erniedrigen, werden herkömmlicherweise Beschichtungen mit einem niedrigen Reibungskoeffizienten verwendet. Diese Beschichtungen können beispielsweise vollständig aus Grafit bestehen oder Grafit und andere Komponenten, wie Füllstoffe, sekundäre Gleitmittel, polymere Bindemittel und Vernetzungsmittel, umfassen.

Die Gleiteigenschaften werden meist durch das Aufbringen von weichen, partikelförmigen Füllstoffen, wie Grafit oder Molybdänsulfid, auf der Elastomeroberfläche des Wischblatts erzielt. Darüber hinaus wird ein effizientes Gleiten meist durch Beschichtungen erzielt, welche einen weichen, partikelförmigen Füllstoffen in einer relativ hohen Menge, beispielsweise von mehr als 60 Volumenprozent, vorzugsweise von mehr als 85 Volumenprozent, bezogen auf die gesamte Beschichtung umfassen.

Die Kohäsionsfestigkeit einer derartigen Beschichtung, ist jedoch sehr niedrig, so dass beim Kontakt des beschichteten Bereiches, beispielsweise bei einem Verarbeitungsschritt, leicht Grafit auf die Hände des Arbeiters übertragen werden und diese verschmutzen kann. Ein Verarbeitungsschritt ist beispielsweise das Einpassen des beschichteten Wischelements in den Wischblattrahmen oder das Befestigen des Wischblatts an den Wischerarmen eines Kraftfahrzeugs.

Auch während des Transports, der Montage, der Handhabung und des Verpackens kann Grafit von dem beschichteten Gummielement auf andere Teile des Wischblatts, beispielsweise auf den Spoilerbereich, übertragen werden, woraus Verschmutzungen resultieren, welche den Verkauf des Wischblatts aus ästhetischen Gründen erschweren.

Darüber hinaus kann das beschichtete Gummielement auch Grafit auf unterschiedliche Bereiche der Fertigungsstraße, beispielsweise auf Fördervorrichtungen und Fördervorrichtungszubehör, übertragen.

Ferner kann in der anfänglichen Wischphase eines neuen Wischblatts Grafit auf die Windschutzscheibe übertragen werden, was zu dunklen Streifen auf einigen Bereichen der Windschutzscheibe, insbesondere den so genannten Flip-over-Bereich, in dem das Wischblatt einen Richtungswechsel vornimmt, führt.

Dokument EP 0 984 877 A1 offenbart ein Wischblatt gemäss dem Oberbegriff des Anspruchs 1.

### J Offenbarung der Erfindung

Gegenstand der vorliegenden Erfindung ist Wischblatt, beispielsweise ein Elastomer-Wischblatt, insbesondere für einen Frontscheibenwischer, umfassend ein Elastomer-Profil, eine Basisschicht, welche die Oberfläche des Elastomer-Profils zumindest teilweise bedeckt und mindestens ein partikelförmiges Gleitmittel umfasst, und eine die Basisschicht bedeckende, wasserlösliche und/oder in Wasser dispergierbare, Deckschicht.

Die doppelte Schichtstruktur auf dem Wischblatt hat den Vorteil, dass die als Deckschicht bezeichnete obere Schicht als Barriere fungiert und die Gleitmittelpartikel der unteren, als Basisschicht bezeichneten Schicht immobilisiert. Dadurch kann eine Übertragung von Gleitmittelpartikeln durch Kontakt vorteilhafterweise verringert beziehungsweise vermieden werden. Die Basisschicht kann daher einen hohen Anteil an partikelförmigem Gleitmittel, beispielsweise Graphit, umfassen, wobei dennoch vermieden wird, dass Gleitmittelpartikel durch Kontakt bei der Handhabung des Wischblatts auf Gegenstände oder Personen, beispielsweise auf die Hand eines Arbeiters, einen anderen Teil des Wischblatts oder der Windschutzscheibe, insbesondere während der Verarbeitung, Beförderung, des Verpackens, der Lagerung und der ersten Verwendung eines neuen Wischblatts, übertragen werden. Durch einen hohen Anteil an partikelförmigem Gleitmittel kann darüber hinaus vorteilhafterweise ein niedriger Reibungsquotienten der Basisschicht gewährleistet werden.

Die vorliegende Erfindung beruht insbesondere auf dem Prinzip, dass die Deckschicht nur eine temporäre Abschirmfunktion übernimmt und sich während der ersten Wischphase eines neuen Wischblattes auflöst und die Gleitmittel enthaltende Basisschicht eine niedrige Reibung beim Wischen der Windschutzscheibe gewährleistet.

Vorzugsweise ist die Basisschicht im Rahmen der vorliegenden Erfindung derart ausgestaltet, dass diese einen niedrigen Reibungskoeffizienten aufweist und/oder eine gute Adhäsion auf dem Elastomer-Profils gewährleistet.

Ein niedriger Reibungskoeffizient der Basisschicht kann durch eine große Menge an partikelförmigem Gleitmittel erzielt werden Beispielsweise kann die Basisschicht ≥ 30 Gewichtsprozent bis ≤ 100 Gewichtsprozent, insbesondere ≥ 45 Gewichtsprozent bis ≤ 95 Gewichtsprozent, vorzugsweise ≥ 60 Gewichtsprozent bis ≤ 90 Gewichtsprozent, bezogen auf das Gesamtgewicht der Basisschicht, an Gleitmitteln umfassen. Vorzugsweise wird das Gleitmittel ausgewählt aus der Gruppe bestehend aus Grafit, Molybdänsulfid, Polyamid, Polyethylen, Polytetrafluorethylen (PTFE), Mikroglasperlen, Wachs und Mischungen davon. Insbesondere kann das Gleitmittel Grafit sein.

Die Basisschicht kann im Rahmen der vorliegenden Erfindung sowohl vollständig aus dem Gleitmittel als auch aus einer Gleitmittel-Additiv-Mischung bestehen. Beispielsweise kann die Basisschicht mindestens ein polymeres Bindemittel umfassen. Insbesondere kann die Basisschicht mindestens ein nicht-wasserlösliches, polymeres Bindemittel und/oder nicht-wasserlösliches, vernetztes, polymeres Bindemittel umfassen

Die Deckschicht ist vorzugsweise derart ausgestaltet, dass diese während der Handhabung, der Verarbeitung, des Verpackens, der Lagerung und der anfänglichen Wischphase eines neuen Wischblatts intakt bleibt.

Im Rahmen einer besonders bevorzugten Ausführungsform der vorliegenden Erfindung umfasst die Deckschicht ein wasserlösliches und/oder in Wasser dispergierbares, insbesondere hydrophiles, polymeres Bindemittel. Vorzugsweise ist das Bindemittel filmbildend.

Im Rahmen einer Ausführungsform der vorliegenden Erfindung ist das Bindemittel der Deckschicht nicht vernetzt. Auf diese Weise kann ein schnelles und vollständiges Auflösen der Deckschicht durch Wassertropfen, insbesondere in der anfänglichen Wischphase beim Wischen einer Windschutzscheibe, gewährleistet und Ablagerungen des Bindemittels verhindert werden.

Obwohl grundsätzlich gewünscht ist, dass das Bindemittel der Deckschicht nicht vernetzt ist, kann die Deckschicht im Rahmen einer weiteren Ausführungsform der vorliegenden Erfindung, vernetzte Bindemittel umfassen. Beispielsweise kann die Deckschicht ≥ 10 Gewichtsprozent bis ≤ 100 Gewichtsprozent, insbesondere ≥ 50 Gewichtsprozent bis ≤ 100 Gewichtsprozent, vorzugsweise ≥ 80 Gewichtsprozent bis ≤ 100 Gewichtsprozent, bezogen auf das Gesamtgewicht der Deckschicht, an vernetzten Bindemitteln umfassen. Insbesondere kann das Bindemittel der Deckschicht durch ein, insbesondere chemisches, Vernetzungsmittel vernetzt sein. Eine partielle Vernetzung des Bindemittels der Deckschicht kann vorteilhafterweise eine verbesserte Immobilisierung der Gleitmittelpartikel im oberen Bereich der Basisschicht zur Folge haben. Darüber hinaus kann ein kontrolliertes Auflösen der Deckschicht erreicht werden, welches zu einer Verzögerung oder Verlangsamung der Gleitmittelabgabe der Basisschicht führt. Eine verzögerte oder verlangsamte Gleitmittelabgabe hat wiederum den Vorteil, dass eine zu hohe Ablagerung von Gleitmittel in Form von streifenförmigen Ablagerungen im Flip-over-Bereich der Windschutzscheibe verhindert werden kann.

Im Rahmen einer weiteren, besonders bevorzugten Ausführungsform der vorliegenden Erfindung weist die Deckschicht Antihafteigenschaften auf. Diese können beispielsweise aus den Eigenschaften des Bindemittels der Deckschicht, beispielsweise Polyvinylalkohol oder Ethylenvinylalkohol-Copolymere, oder aus der Gegenwart von Antihaftadditiven, wie Polyethylen- oder Polyamid-Dispersionen, resultieren.

Im Rahmen einer weiteren, besonders bevorzugten Ausführungsform der vorliegenden Erfindung wird das Bindemittel der Deckschicht ausgewählt aus der Gruppe, bestehend aus Cellulose-Polymere, Vinylacetat-Maleinsäure Copolymere, Styrol-Maleinsäure-Copolymere, Polyacrylsäuren, Polymethacrylsäuren, Hydroxyethylenpolymere, Polyethylenglycole, Hydroxypropylenpolymere, Polyvinylalkohole und Mischungen davon. Vorzugsweise wird das Bindemittel der Deckschicht dabei ausgewählt aus der Gruppe, bestehend aus Polyvinylalkohol (PVOH), Ethylenvinylalkohol-Copolymere, Celluloseether, Polyethylenoxid, Stärke, Polyvinylpyrrolidon, Polyacrylamid, Polyacrylnitril, Polyvinylmethylether-Maleinsäureanhydrid, Styrol-Maleinsäureanhydrid, Hydroxyethylcellulose, Methylcellulose, Polyethylenglykole, Carboxymethylcellulose, Polyacrylsäuresalze, Alginate, Acrylamid-Copolymere, Guargummi, Casein, Ethylen-Maleinsäureanhydrid-Harze, Polyethylenimin, Ethylhydroxyethylcellulose, Ethylmethylcellulose, Hydroxyethylmethylcellulose und Mischungen davon. Polyvinylalkohol ist als Bindemittel der Deckschicht besonders bevorzugt.

Im Rahmen einer weiteren, besonders bevorzugten Ausführungsform der vorliegenden Erfindung umfasst die Deckschicht mindestens einen Verstärkungsfüllstoff, und/oder mindestens einen hydrophilen Füllstoff, und/oder mindestens ein Anti-Haftmittel, und/oder mindestens ein Benetzungsmittel, und/oder mindestens ein Dispersionsmittel, und/oder mindestens ein Verdickungsmittel. Vorzugsweise ist der hydrophile Füllstoff dabei eine Kolloid-Kieselerde. Beispielsweise kann die Deckschicht ein Benetzungsmittel, ein Dispersionsmittel und ein Verdickungsmittel umfassen.

Im Rahmen einer weiteren, besonders bevorzugten Ausführungsform der vorliegenden Erfindung sind die Basisschicht und/oder die Deckschicht auf beiden Seitenflächen und/oder der Stirnfläche der Wischlippe des Elastomer-Wischblatts angeordnet.

Ein weiterer Gegenstand der vorliegenden Erfindung ist ein Herstellungsverfahren zur Bereitstellung einer Gleitmittelbeschichtung auf einem Wischblatt, beispielsweise einem Elastomer-Wischblatt, insbesondere zur Herstellung eines erfindungsgemäßen Wischblatts, umfassend die Verfahrensschritte:
- Beschichten der Oberfläche eines Elastomer-Profils (1), insbesondere eines Elastomer-Wischblatts, mit mindestens einer, ein partikelförmiges Gleitmittel (2) umfassenden Basisschicht (3),
- Beschichten der Basisschicht (3) mit einer wasserlöslichen und/oder in Wasser dispergierbaren Deckschicht (4).

Dabei kann die Basisschicht ≥ 30 Gewichtsprozent bis ≤ 100 Gewichtsprozent, insbesondere ≥ 45 Gewichtsprozent bis ≤ 95 Gewichtsprozent, vorzugsweise ≥ 60 Gewichtsprozent bis ≤ 90 Gewichtsprozent, bezogen auf das Gesamtgewicht der Basisbeschichtung, an Gleitmitteln umfassen. Vorzugsweise wird das Gleitmittel ausgewählt aus der Gruppe bestehend aus Grafit, Molybdänsulfid, Polyamid, Polyethylen, Polytetrafluorethylen (PTFE), Mikroglasperlen, Wachs und Mischungen davon. Insbesondere kann das Gleitmittel Grafit sein.

Im Rahmen einer Ausführungsform des erfindungsgemäßen Verfahrens umfasst die Basisschicht mindestens ein polymeres Bindemittel. Insbesondere kann die Basisschicht mindestens ein nicht-wasserlösliches, polymeres Bindemittel und/oder nicht-wasserlösliches, vernetztes, polymeres Bindemittel umfassen.

Im Rahmen einer besonders bevorzugten Ausführungsform des erfindungsgemäßen Verfahrens umfasst die Deckschicht ein wasserlösliches und/oder in Wasser dispergierbares, insbesondere hydrophiles, polymeres Bindemittel. Vorzugsweise ist das Bindemittel filmbildend.

Im Rahmen einer Ausführungsform des erfindungsgemäßen Verfahrens ist das Bindemittel der Deckschicht nicht vernetzt.

Im Rahmen einer weiteren Ausführungsform des erfindungsgemäßen Verfahrens umfasst die Deckschicht vernetzte Bindemittel. Beispielsweise kann die Deckschicht ≥ 10 Gewichtsprozent bis ≤ 100 Gewichtsprozent, insbesondere ≥ 50 Gewichtsprozent bis ≤ 100 Gewichtsprozent, vorzugsweise ≥ 80 Gewichtsprozent bis ≤ 100 Gewichtsprozent, bezogen auf das Gesamtgewicht der Deckschicht, an vernetzten Bindemitteln umfassen.

Im Rahmen einer weiteren, besonders bevorzugten Ausführungsform des erfindungsgemäßen Verfahrens weist die Deckschicht Antihafteigenschaften auf. Diese können beispielsweise aus den Eigenschaften des Bindemittels, beispielsweise Polyvinylalkohol oder Ethylenvinylalkohol-Copolymere, oder aus der Gegenwart von Antihaftadditiven, wie Polyethylen- oder Polyamid-Dispersionen, resultieren.

Im Rahmen einer weiteren, besonders bevorzugten Ausführungsform des erfindungsgemäßen Verfahrens das Bindemittel der Deckschicht ausgewählt aus der Gruppe, bestehend aus Cellulose-Polymere, Vinylacetat-Maleinsäure Copolymere, Styrol-Maleinsäure-Copolymere, Polyacrylsäuren, Polymethacrylsäuren, Hydroxyethylenpolymere, Polyethylenglycole, Hydroxypropylenpolymere, Polyvinylalkohole und Mischungen davon. Insbesondere kann das Bindemittel der Deckschicht, ausgewählt werden aus der Gruppe, bestehend aus Polyvinylalkohol (PVOH), Ethylenvinylalkohol-Copolymere, Celluloseether, Polyethylenoxid, Stärke, Polyvinylpyrrolidon, Polyacrylamid, Polyacrylnitril, Polyvinylmethylether-Maleinsäureanhydrid, Styrol-Maleinsäureanhydrid, Hydroxyethylcellulose, Methylcellulose, Polyethylenglykole, Carboxymethylcellulose, Polyacrylsäuresalze, Alginate, Acrylamid-Copolymere, Guargummi, Casein, Ethylen-Maleinsäureanhydrid-Harze, Polyethylenimin, Ethylhydroxyethylcellulose, Ethylmethylcellulose, Hydroxyethylmethylcellulose und Mischungen davon. Vorzugsweise ist das Bindemittel ein Polyvinylalkohol.

Im Rahmen einer weiteren, besonders bevorzugten Ausführungsform des erfindungsgemäßen Verfahrens wird die Deckschicht durch ein Sprüh- und/oder Gießverfahren auf der Basisschicht aufgebracht.

Im Rahmen einer weiteren, besonders bevorzugten Ausführungsform des erfindungsgemäßen Verfahrens wird die Basisschicht vor dem Aufbringen der Deckschicht getrocknet und/oder gehärtet. Auf diese Weise kann das Aufquellen der Basisschicht beim Aufsprühen einer wässrigen Deckschichtzusammensetzung vermieden und dadurch ein Vermischen der beiden Schichten, welches die Wasserfestigkeit der Basisschicht senkt, verhindert werden.

Im Rahmen einer weiteren, besonders bevorzugten Ausführungsform des erfindungsgemäßen Verfahrens wird das Bindemittel der Deckschicht durch ein, insbesondere chemisches, Vernetzungsmittel vernetzt. Dabei ist das Vernetzungsmittel vorzugsweise wasserlöslich oder in Wasser dispergierbar. Weiterhin vorzugsweise reagiert das Vernetzungsmittel mit den funktionellen Gruppen des Bindemittels der Deckschicht nachdem das Vernetzungsmittel teilweise oder vollständig hydrolysiert wurde. Dabei kann das Vernetzungsmittel ausgewählt werden aus der Gruppe bestehend aus Tetraalkoxysilanen (Tetraalkylorthosilikaten), Tetraethyoxysilan (Tetraethylorthosilikat), Tetramethoxysilan (Tetramethylorthosilikat), mit organischen Resten funktionalisiserten Alkoxysilanen, Tetraisopropyltitanat, Tetra-N-butyltitanat, Acetylacetontitanat, wasserlösliche Melaminharze und Mischungen davon. Vorzugsweise ist das Vernetzungsmittel ein Alkoxysilan oder ein wasserlösliches Melaminharz.

Im Rahmen einer weiteren, besonders bevorzugten Ausführungsform des erfindungsgemäßen Verfahrens erfolgt das Vernetzen des Bindemittels durch das Vernetzungsmittel bei einer Temperatur von ≥ 20 °C bis ≤ 160 °C, insbesondere von ≥ 25 °C bis ≤ 155 °C, vorzugsweise von ≥ 30 °C bis ≤ 150 °C.

Im Rahmen einer weiteren, besonders bevorzugten Ausführungsform des erfindungsgemäßen Verfahrens umfasst die Deckschicht mindestens einen Verstärkungsfüllstoff, und/oder mindestens einen hydrophilen Füllstoff, und/oder mindestens ein Anti-Haftmittel, und/oder mindestens ein Benetzungsmittel, und/oder mindestens ein Dispersionsmittel, und/oder mindestens ein Verdickungsmittel. Der hydrophile Füllstoff ist dabei vorzugsweise eine Kolloid-Kieselerde. Beispielsweise umfasst die Deckschicht ein Benetzungsmittel, ein Dispersionsmittel und ein Verdickungsmittel.

Im Rahmen einer weiteren, besonders bevorzugten Ausführungsform des erfindungsgemäßen Verfahrens werden die Basisschicht und/oder die Deckschicht derart auf das Elastomer-Profil aufgetragen wird, dass die Basisschicht und/oder die Deckschicht auf beiden Seitenflächen und/oder der Stirnfläche der Wischlippe des hergestellten oder herzustellenden Elastomer-Wischblatts angeordnet sind.

Im Rahmen einer weiteren, besonders bevorzugten Ausführungsform des erfindungsgemäßen Verfahrens werden die Basisschicht und/oder die Deckschicht auf einem mehrfachen, insbesondere doppelten, Elastomer-Profils aufgetragen, bevor das Elastomer-Profil in einem Schneidverfahren in mehrere, insbesondere zwei, Elastomer-Profile aufgetrennt wird. Auf diese Weise kann vorteilhafterweise eine Vielzahl von Wischblättern in kurzer Zeit hergestellt werden.

### Zeichnungen

Weitere Vorteile und vorteilhafte Ausgestaltungen des erfindungsgemäßen Gegenstandes werden durch die Zeichnung veranschaulicht und in der nachfolgenden Beschreibung erläutert. Dabei ist zu beachten, dass die Zeichnung nur beschreibenden Charakter hat und nicht dazu gedacht ist, die Erfindung in irgendeiner Form einzuschränken. Es zeigt:

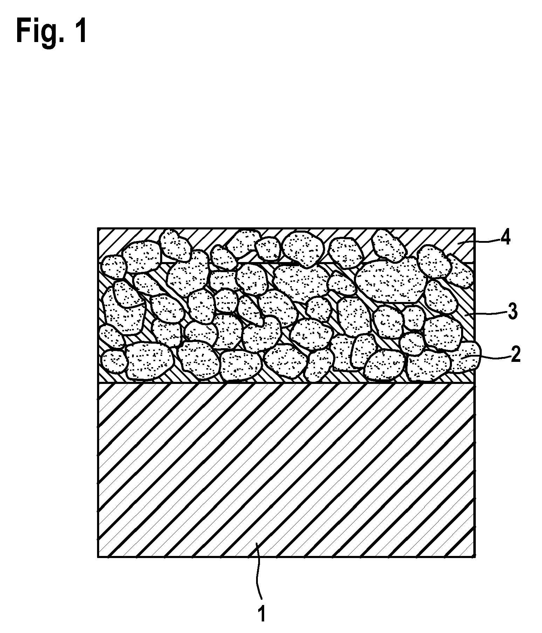

- Fig. 1: einen schematischen Querschnitt durch eine Ausführungsform eines erfindungsgemäßen Wischblattes.

Figur 1 zeigt eine Ausführungsform eines erfindungsgemäßen Wischblattes. Figur 1 veranschaulicht, dass das Wischblatt ein Elastomer-Profil **1** aufweist auf dem eine Basisschicht **3** angeordnet ist, welche Gleitmittelpartikel **2** umfasst. Figur 1 zeigt, dass die Basisschicht **3** im Wesentlichen "sphärische", inbesondere Kartoffel-förmige ("potato-shaped") Gleitmittelpartikel **2** umfasst. Im Rahmen der vorliegenden Erfindung ist es jedoch ebenso möglich, dass die Gleitmittelpartikel **2** andersartig geformt sind. Beispielsweise können die Gleitmittelpartikel **2** schuppen-förmig ("flake shaped") ausgestaltet sein. Figur 1 zeigt weiterhin, dass auf der Basisschicht **3** eine Deckschicht **4** angeordnet ist, welche die Basisschicht **3** bedeckt. Die Deckschicht **4** ist vorzugsweise wasserlöslichen und/oder in Wasser dispergierbar.

### Beispiele

Weitere Vorteile und vorteilhafte Ausgestaltungen des erfindungsgemäßen Gegenstandes werden durch die Beispiele veranschaulicht und erläutert. Dabei ist zu beachten, dass die Beispiele nur beschreibenden Charakter haben und nicht dazu gedacht ist, die Erfindung in irgendeiner Form einzuschränken.

### Beispiel 1

Auf der Wischlippe eines, ein chloriertes Gummi umfassenden Wischblattes wurde eine Grafitdispersion derart aufgesprüht, dass die Seitenflächen und die Stirnfläche der Wischlippe beschichtet wurden. Nach dem Trocknen bei 80 °C (zum Verdampfen des wässrigen Lösungsmittels) wurde eine unvernetzte, Grafit enthaltende Basisschicht mit der folgenden Zusammensetzung erhalten:

| | Massenprozent | Volumenprozent |
|---|---|---|
| Gesamtanteil an Bindepolymeren | 8,0 | 13,7 |
| Gesamtanteil an Verdickungsmitteln | 3,0 | 5,1 |
| Gesamtanteil an oberflächenaktiven Stoffen | 6,0 | 10,3 |
| Grafit | 83,0 | 70,9 |
| Summe | 100 | 100 |

Bei der Handhabung der Wischblätter lagerte sich Grafit auf der Hand des Arbeiters ab.

Um eine wasserlösliche Deckschicht zu erhalten, wurde auf diese Basisschicht eine wässrige Beschichtungszusammensetzung aufgesprüht, welche entsprechend der folgenden Tabelle zusammengesetzt war:

| | Gewicht [g] |
|---|---|
| 5 % Polyvinylalkohollösung | 680 |
| 10 % Benetzungsmittel | 22 |
| entionisiertes Wasser | 298 |
| Summe | 1000 |

Nach dem Trocknen in einem Heißluftofen mit Bandförderer bei einer Lufttemperatur von 90 °C wurde eine trockene Beschichtung mit einer Schichtdicke von 2 µm erhalten.

Das manuelle Handhaben der Wischblätter hatte keinen Transfer von Grafit auf die Hand des Arbeiters zur Folge.

Die Wischblätter wurden tausend Wischzyklen auf einer mit Wasser besprühten Windschutzscheibe betrieben. Die hydrophile Beschichtung löste sich dabei auf ohne Grafitspuren oder -ablagerungen auf der Windschutzscheibe zu hinterlassen.

### Beispiel 2

Eine Basisschicht aus reinem Grafit wurde durch Aufbringen eines trockenen Pulvers hergestellt. Diese verschmierte auf der Oberfläche der Basisschicht.

Das manuelle Handhaben der Wischblätter führte dazu, dass Grafit auf die Hände des Arbeiters übertragen wurde,

Um eine wasserlösliche Deckschicht zu erhalten, wurde auf diese Basisschicht anschließend eine wässrige Beschichtungszusammensetzung aufgesprüht, welche entsprechend der folgenden Tabelle zusammengesetzt war:

| | Gewicht [g] |
|---|---|
| 5 % Polyvinylalkohollösung | 680 |
| 10 % Benetzungsmittel | 22 |
| entionisiertes Wasser | 298 |
| Summe | 1000 |

Nach dem Trocknen in einem Heißluftofen mit Bandförderer bei einer Lufttemperatur von 90 °C wurde eine trockene Beschichtung mit einer Schichtdicke von 2 µm erhalten.

Das manuelle Handhaben der Wischblätter hatte keinen Transfer von Grafit auf die Hand des Arbeiters zur Folge.

Die Wischblätter wurden tausend Wischzyklen auf einer mit Wasser besprühten Windschutzscheibe betrieben. Die hydrophile Beschichtung löste sich dabei auf ohne Grafitspuren oder -ablagerungen auf der Windschutzscheibe zu hinterlassen.

### Beispiel 3

Auf der Wischlippe eines, ein chloriertes Gummi umfassenden Wischblattes wurde eine Grafitdispersion derart aufgesprüht, dass die Seitenflächen und die Stirnfläche der Wischlippe beschichtet wurden. Nach dem Trocknen bei 80 °C (zum Verdampfen des wässrigen Lösungsmittels) wurde eine unvernetzte, Grafit enthaltende Basisschicht mit der folgenden Zusammensetzung erhalten:

| | Massenprozent | Volumenprozent |
|---|---|---|
| Gesamtanteil an Bindepolymeren | 9,3 | 16,7 |
| Gesamtanteil an Verdickungsmitteln | 0,5 | 0,9 |
| Gesamtanteil an oberflächenaktiven Stoffen | 1,6 | 2,9 |
| Vernetzungsmittel auf Organoalkoxysilan-Basis | 0,5 | 0,8 |
| Grafit | 88,1 | 78,7 |
| Summe | 100 | 100 |

Bei der Handhabung der Wischblätter lagerte sich Grafit auf der Hand des Arbeiters ab.

Um eine wasserlösliche Deckschicht zu erhalten, wurde auf diese Basisschicht eine wässrige Beschichtungszusammensetzung aufgesprüht, welche entsprechend der folgenden Tabelle zusammengesetzt war:

| | Gewicht [g] |
|---|---|
| 5 % Polyvinylalkohollösung | 680 |
| 10 % Benetzungsmittel | 22 |
| entionisiertes Wasser | 298 |
| Summe | 1000 |

Nach dem Trocknen in einem Heißluftofen mit Bandförderer bei einer Lufttemperatur von 90 °C wurde eine trockene Beschichtung mit einer Schichtdicke von 2 µm erhalten.

Das manuelle Handhaben dieser Wischblätter hatte keinen Transfer von Grafit auf die Hand des Arbeiters zur Folge.

Die Wischblätter wurden tausend Wischzyklen auf einer mit Wasser besprühten Windschutzscheibe betrieben. Die hydrophile Beschichtung löste sich dabei auf ohne Grafitspuren oder -ablagerungen auf der Windschutzscheibe zu hinterlassen.

### Beispiel 4

Auf der Wischlippe eines, ein chloriertes Gummi umfassenden Wischblattes wurde eine Grafitdispersion derart aufgesprüht, dass die Seitenflächen und die Stirnfläche der Wischlippe beschichtet wurden. Nach dem Trocknen bei 80 °C (zum Verdampfen des wässrigen Lösungsmittels) wurde eine unvernetzte, Grafit enthaltende Basisschicht mit der folgenden Zusammensetzung erhalten:

| | Massenprozent | Volumenprozent |
|---|---|---|
| Gesamtanteil an Bindepolymeren | 9,3 | 16,7 |
| Gesamtanteil an Verdickungsmitteln | 0,5 | 0,9 |
| Gesamtanteil an oberflächenaktiven Stoffen | 1,6 | 2,9 |
| Vernetzungsmittel auf Organoalkoxysilan-Basis | 0,5 | 0,8 |
| Grafit | 88,1 | 78,7 |
| Summe | 100 | 100 |

Bei der Handhabung der Wischblättern lagerte sich Grafit auf der Hand des Arbeiters ab.

Um eine wasserlösliche Deckschicht zu erhalten, wurde auf diese Basisschicht eine wässrige Beschichtungszusammensetzung aufgesprüht, welche entsprechend der folgenden Tabelle zusammengesetzt war:

| | Gewicht [g] |
|---|---|
| 5 % Polyvinylalkohollösung | 680 |
| 10 % Benetzungsmittel | 22 |
| 22 % hydrolisiertes Tetramethoxysilan in Wasser | 35 |
| entionisiertes Wasser | 263 |
| Summe | 1000 |

Nach dem Trocknen in einem Heißluftofen mit Bandförderer bei einer Lufttemperatur von 60 °C zum Verdampfen des wässrigen Lösungsmittels, wurden die Wischblätter für mehrere Stunden auf 80 °C erhitzt. Eine gehärtete Beschichtung mit einer Schichtdicke von 2 µm wurde erhalten.

Das manuelle Handhaben dieser Wischblättern hatte keinen Transfer von Grafit auf die Hand des Arbeiters zur Folge.

Die Wischblätter wurden tausend Wischzyklen auf einer mit Wasser besprühten Windschutzscheibe betrieben. Die hydrophile Beschichtung löste sich dabei auf ohne Grafitspuren oder -ablagerungen auf der Windschutzscheibe zu hinterlassen.

### Beispiel 5

Auf der Wischlippe eines, ein chloriertes Gummi umfassenden Wischblattes wurde eine Grafitdispersion gesprüht, um die Seitenflächen und die Stirnfläche der Wischlippe zu beschichten. Nach dem Trocknen bei 80 °C (zum Verdampfen des wässrigen Lösungsmittels) wurde eine unvernetzte, Grafit enthaltende Basis schicht mit der folgenden Zusammensetzung erhalten:

| | Massenprozent | Volumenprozent |
|---|---|---|
| Gesamtanteil an Bindepolymeren | 8,0 | 13,7 |
| Gesamtanteil an Verdickungsmitteln | 3,0 | 5,1 |
| Gesamtanteil an oberflächenaktiven Stoffen | 6,0 | 10,3 |
| Grafit | 83,0 | 70,9 |
| Summe | 100 | 100 |

Um eine wasserlösliche Deckschicht zu erhalten, wurde auf diese Basisschicht eine wässrige Beschichtungszusammensetzung aufgesprüht, welche entsprechend der folgenden Tabelle zusammengesetzt war:

| | Gewicht [g] |
|---|---|
| 5 % Polyvinylalkohollösung | 680 |
| 10 % Benetzungsmittel | 22 |
| 35 % HDPE Dispersion | 50 |
| entionisiertes Wasser | 248 |
| Summe | 1000 |

Nach dem Trocknen in einem Heißluftofen mit Bandförderer bei einer Lufttemperatur von 90 °C wurde eine trockene Beschichtung mit einer Schichtdicke von 2 µm erhalten.

Das manuelle Handhaben dieser Wischblätter hatte keinen Transfer von Grafit auf die Hand des Arbeiters zur Folge.

Die Wischblätter wurden tausend Wischzyklen auf einer mit Wasser besprühten Windschutzscheibe betrieben. Die hydrophile Beschichtung löste sich dabei auf ohne Grafitspuren oder -ablagerungen auf der Windschutzscheibe zu hinterlassen.

## Patentansprüche

1. Wischblatt, umfassend
- Elastomer-Profil (1),
- eine Basisschicht (3), welche die Oberfläche des Elastomer-Profils (1) zumindest teilweise bedeckt und mindestens ein partikelförmiges Gleitmittel (2) umfasst, **gekennzeichnet, durch**
- eine die Basisschicht (3) bedeckende, wasserlösliche und/oder in Wasser dispergierbare Deckschicht (4).

2. Wischblatt nach Anspruch 1, **dadurch gekennzeichnet, dass** die Basisschicht (3) ein nicht-wasserlösliches, polymeres Bindemittel und/oder ein nicht-wasserlösliches, vernetztes, polymeres Bindemittel umfasst.

3. Wischblatt nach Anspruch 1 oder 2, **dadurch gekennzeichnet, dass** die Deckschicht (4) ein wasserlösliches und/oder in Wasser dispergierbares, polymeres Bindemittel umfasst.

4. Wischblatt nach einem der Ansprüche 1 bis 3, **dadurch gekennzeichnet, dass** die Deckschicht (4):
- mindestens einen Verstärkungsfüllstoff, und/oder
- mindestens einen hydrophilen Füllstoff, und/oder
- mindestens ein Anti-Haftmittel, und/oder
- mindestens ein Benetzungsmittel, und/oder
- mindestens ein Dispersionsmittel, und/oder
- mindestens ein Verdickungsmittel,
umfasst.

5. Herstellungsverfahren zur Bereitstellung einer Gleitmittelbeschichtung auf einem Wischblatt, umfassend den Verfahrenschritt:
- Beschichten der Oberfläche eines Elastomer-Profils (1) mit einer, mindestens ein partikelförmiges Gleitmittel (2) umfassenden Basisschicht (3), **gekennzeichnet, durch** den Verfahrenschritt:
- Beschichten der Basisschicht (3) mit einer wasserlöslichen und/oder in Wasser dispergierbaren Deckschicht (4).

6. Verfahren nach Anspruch 5, **dadurch gekennzeichnet, dass** die Basisschicht (3) ein nicht-wasserlösliches, polymeres Bindemittel und/oder ein nicht-wasserlösliches, vernetztes, polymeres Bindemittel umfasst.

7. Verfahren nach Anspruch 5 oder 6, **dadurch gekennzeichnet, dass** die Deckschicht (4) ein wasserlösliches und/oder in Wasser dispergierbares, insbesondere hydrophiles, polymeres Bindemittel umfasst.

8. Verfahren nach einem der Ansprüche 5 bis 7, **dadurch gekennzeichnet, dass** das Bindemittel der Deckschicht durch ein Vernetzungsmittel vernetzt wird.

9. Verfahren nach einem der Ansprüche 5 bis 8, **dadurch gekennzeichnet, dass** das Vernetzungsmittel mit den funktionellen Gruppen des Bindemittels der Deckschicht reagiert nachdem das Vernetzungsmittel teilweise oder vollständig hydrolysiert wurde.

10. Verfahren nach einem der Ansprüche 5 bis 9, **dadurch gekennzeichnet, dass** das Vernetzen des Bindemittels durch das Vernetzungsmittel bei einer Temperatur von ≥ 20 °C bis ≤ 160 °C erfolgt.

11. Verfahren nach einem der Ansprüche 5 bis 10, **dadurch gekennzeichnet, dass** die Deckschicht (4):
- mindestens einen Verstärkungsfüllstoff, und/oder
- mindestens einen hydrophilen Füllstoff, und/oder
- mindestens ein Anti-Haftmittel, und/oder
- mindestens ein Benetzungsmittel, und/oder
- mindestens ein Dispersionsmittel, und/oder
- mindestens ein Verdickungsmittel,
umfasst.

12. Verfahren nach einem der Ansprüche 5 bis 11, **dadurch gekennzeichnet, dass** die Basisschicht (3) und/oder die Deckschicht (4) auf einem mehrfachen Elastomer-Profils aufgetragen werden, bevor das Elastomer-Profil in einem Schneidverfahren in mehrere Elastomer-Profile aufgetrennt wird.

## Claims

1. Wiper blade comprising
- elastomer profile (1),
- a base layer (3) which at least to some extent covers the surface of the elastomer profile (1) and comprises at least one particulate lubricant (2), **characterized by**
- a water-soluble and/or water-dispersible outer layer (4) covering the base layer (3).

2. Wiper blade according to Claim 1, **characterized in that** the base layer (3) comprises a non-water-soluble, polymeric binder and/or a non-water-soluble, crosslinked, polymeric binder.

3. Wiper blade according to Claim 1 or 2, **characterized in that** the outer layer (4) comprises a water-soluble and/or water-dispersible, polymeric binder.

4. Wiper blade according to any of Claims 1 to 3, **characterized in that** the outer layer (4) comprises:
- at least one reinforcing filler, and/or
- at least one hydrophilic filler, and/or
- at least one anti-adhesive agent, and/or
- at least one wetting agent, and/or
- at least one dispersing agent, and/or
- at least one thickening agent.

5. Production process for the provision of a lubricant coating on a wiper blade, comprising the step of:
- coating of the surface of an elastomer profile (1) with a base layer (3) comprising at least one particulate lubricant (2),
**characterized by** the step of:
- coating of the base layer (3) with a water-soluble and/or water-dispersible outer layer (4).

6. Process according to Claim 5, **characterized in that** the base layer (3) comprises a non-water-soluble, polymeric binder and/or a non-water-soluble, crosslinked, polymeric binder.

7. Process according to Claim 5 or 6, **characterized in that** the outer layer (4) comprises a water-soluble and/or water-dispersible, in particular hydrophilic, polymeric binder.

8. Process according to any of Claims 5 to 7, **characterized in that** the binder of the outer layer is crosslinked via a crosslinking agent.

9. Process according to any of Claims 5 to 8, **characterized in that** the crosslinking agent reacts with the functional groups of the binder of the outer layer after the crosslinking agent has been to some extent or completely hydrolysed.

10. Process according to any of Claims 5 to 9, **characterized in that** the crosslinking of the binder takes place via the crosslinking agent at a temperature of from ≥ 20°C to ≤ 160°C.

11. Process according to any of Claims 5 to 10, **characterized in that** the outer layer (4) comprises:
- at least one reinforcing filler, and/or
- at least one hydrophilic filler, and/or
- at least one anti-adhesive agent, and/or
- at least one wetting agent, and/or
- at least one dispersing agent, and/or
- at least one thickening agent.

12. Process according to any of Claims 5 to 11, **characterized in that** the base layer (3) and/or the outer layer (4) are applied on a non-singular elastomer profile, before the elastomer profile is separated in a cutting process to give more than one elastomer profile.

## Revendications

1. Raclette d'essuie-glace, comprenant :
- un profilé élastomère (1),
- une couche de base (3), qui recouvre au moins partiellement la surface du profilé élastomère (1) et comprend au moins un lubrifiant particulaire (2), **caractérisée par**
- une couche supérieure (4) soluble dans l'eau et/ou dispersible dans l'eau, recouvrant la couche de base (3).

2. Raclette d'essuie-glace selon la revendication 1, **caractérisée en ce que** la couche de base (3) comprend un liant polymère non soluble dans l'eau et/ou un liant polymère réticulé non soluble dans l'eau.

3. Raclette d'essuie-glace selon la revendication 1 ou 2, **caractérisée en ce que** la couche supérieure (4) comprend un liant polymère soluble dans l'eau et/ou dispersible dans l'eau.

4. Raclette d'essuie-glace selon l'une quelconque des revendications 1 à 3, **caractérisée en ce que** la couche supérieure (4) comprend :
- au moins une charge renforçante et/ou
- au moins une charge hydrophile et/ou
- au moins un agent anti-adhérent et/ou
- au moins un agent mouillant et/ou
- au moins un dispersant et/ou
- au moins un épaississant.

5. Procédé de fabrication pour la mise en place d'un revêtement lubrifiant sur une raclette d'essuie-glace, comprenant l'étape de procédé :
- le revêtement de la surface d'un profilé élastomère (1) avec une couche de base (3) comprenant au moins un lubrifiant particulaire (2),
**caractérisé par** l'étape de procédé :
- le revêtement de la couche de base (3) avec une couche supérieure (4) soluble dans l'eau et/ou dispersible dans l'eau.

6. Procédé selon la revendication 5, **caractérisé en ce que** la couche de base (3) comprend un liant polymère non soluble dans l'eau et/ou un liant polymère réticulé non soluble dans l'eau.

7. Procédé selon la revendication 5 ou 6, **caractérisé en ce que** la couche supérieure (4) comprend un liant polymère soluble dans l'eau et/ou dispersible dans l'eau, notamment hydrophile.

8. Procédé selon l'une quelconque des revendications 5 à 7, **caractérisé en ce que** le liant de la couche supérieure est réticulé par un agent de réticulation.

9. Procédé selon l'une quelconque des revendications 5 à 8, **caractérisé en ce que** l'agent de réticulation réagit avec les groupes fonctionnels du liant de la couche supérieure après l'hydrolyse partielle ou totale de l'agent de réticulation.

10. Procédé selon l'une quelconque des revendications 5 à 9, **caractérisé en ce que** la réticulation du liant par l'agent de réticulation a lieu à une température de ≥ 20 °C à ≤ 160 °C.

11. Procédé selon l'une quelconque des revendications 5 à 10, **caractérisé en ce que** la couche supérieure (4) comprend :
- au moins une charge renforçante et/ou
- au moins une charge hydrophile et/ou
- au moins un agent anti-adhérent et/ou
- au moins un agent mouillant et/ou
- au moins un dispersant et/ou
- au moins un épaississant.

12. Procédé selon l'une quelconque des revendications 5 à 11, **caractérisé en ce que** la couche de base (3) et/ou la couche supérieure (4) sont appliquées sur un profilé élastomère multiple, puis le profilé élastomère est séparé en plusieurs profilés élastomères par un procédé de découpage.
